# DEMANDE DE BREVET EUROPEEN

(11) **EP 3 932 886 A1**
(43) Date de publication de la demande: **05.01.2022**
(21) Numéro de dépôt: 21183579.8
(22) Date de dépôt: 02.07.2021
(51) Int. Cl.: C04B 28/00, C04B 28/26

(54) **NOUVEAU PROCEDE DE FABRICATION D'UN ELEMENT DE PREFABRICATION**

(30) Priorité: 02.07.2020 FR 2007038
(71) Demandeur: Materr'up, 40230 Saint-Geours-de-Maremne (FR)
(72) Inventeur: NEUVILLE, Mathieu, 40140 Soustons (FR); MERCE, Manuel, 40230 Benesse Maremne (FR)
(74) Mandataire: A.P.I. Conseil

(57) **Abrégé**

L'invention porte sur un procédé (100) de réalisation d'un élément de préfabrication préparé à partir d'un liant de construction, ledit liant comportant une composition d'activation alcaline et une composition de silicate et d'oxydes métalliques, des granulats et de l'eau, ledit procédé comprenant :
- une étape de mélange (120) des constituants du liant de construction avec les granulats et l'eau, et
- une étape de cure (130) du mélange pendant au moins 2 heures ;
ledit procédé étant caractérisé en ce que le liant de construction comporte en outre une matrice argileuse crue, ladite matrice argileuse crue comportant de la kaolinite et/ou de l'illite ; et
en ce que l'étape de cure (130) comporte un traitement thermique du mélange et/ou le liant de construction comporte en outre un agent défloculant.

## Description

L'invention s'intéresse au domaine des matériaux de construction, et plus particulièrement à un procédé de réalisation d'un élément de préfabrication préparé à partir d'un liant de construction et l'élément de préfabrication en tant que tel.

### [Art antérieur]

Le ciment est la deuxième ressource la plus consommée au monde, avec plus de 4 milliards de tonnes de matériaux produits chaque année dans le monde et cette consommation est en constante augmentation, portée par la demande croissante de logements et d'infrastructures. Le ciment est un liant généralement hydraulique qui, mélangé à de l'eau, durcit et prend en masse. Après durcissement, le ciment conserve sa résistance ainsi que sa stabilité et cela même exposé à l'eau. Il existe une grande variété de ciments utilisés dans le monde. Néanmoins tous les ciments conventionnels comportent un clinker. Le clinker résulte de la cuisson d'un mélange composé d'environ 80 % de calcaire et de 20 % d'aluminosilicates (tels que des argiles). Une cuisson, la clinkérisation, se fait généralement à une température de plus de 1200°C, un tel processus de préparation de ciments implique donc une forte consommation énergétique. De plus, la conversion chimique du calcaire en chaux libère également du dioxyde de carbone. En conséquence, l'industrie du ciment génère environ 4 à 8% des émissions mondiales de CO₂. Face à ce défi, l'industrie et les chercheurs étudient les possibilités de réduire l'impact des émissions de dioxyde de carbone générées par l'industrie du ciment.

Outre la réduction des émissions de dioxyde de carbone, l'industrie du ciment cherche aussi à identifier des substituants au ciment Portland présentant des propriétés mécaniques qui répondent à des exigences en matière de résistance à la compression ou à la flexion particulières à des temps de cure donnés. En effet, une portion croissante de l'utilisation du ciment est destinée à la conception de structures en béton préfabriquées. Pour cela, le béton est souvent coulé en usine dans des moules afin de former les pièces qui, une fois sèches, constitueront une partie de la structure d'un bâtiment en construction.

Ainsi, il a été proposé de remplacer une partie du ciment Portland par des cendres volantes, des laitiers de hauts fourneaux ou des métakaolin, ces préparations ne permettent pas toujours d'obtenir en tant que telles des résistances mécaniques satisfaisantes après 20 heures de séchage. Elles ne sont donc pas adaptées à la conception de structures en béton préfabriquées.

Il a par exemple été proposé dans le brevet n°EP3006416, un nouveau procédé de fabrication d'un liant de construction hydraulique visant à substituer l'utilisation du ciment Portland et plus généralement l'utilisation de clinker. La solution décrite dans ce brevet propose la réalisation d'un béton à partir d'un mélange comprenant un laitier, un activateur alcalin à base de carbonate de sodium et de granulats. Néanmoins, afin de permettre la prise du béton, le mélange est soumis à un protocole progressif de traitement thermique. Or, l'obligation de passer par un traitement thermique ne permet pas une adoption large de ce procédé par l'industrie du ciment. En outre, l'utilisation de concentrations très élevées (>80%) de laitier de hauts fourneaux bien que permettant de réduire le bilan carbone n'est pas une pratique optimale dans un contexte de recherche d'un matériau de construction réellement bas carbone. En effet, l'empreinte carbone des laitiers, coproduit pour les fabricants d'acier et déchet pour les cimentiers, peut être remise en question. Ainsi, une utilisation à des pourcentages très élevés (>80%) ne parait pas satisfaisante dans un contexte de réduction du bilan carbone des pièces en béton préfabriquées.

Il a également été proposée d'utiliser des cendres volantes en combinaison avec des carbonates de métal alcalin et d'une faible concentration en argile crue (US7288148). De la même façon, il a été proposé des préparations à base de cendres volantes en combinaison avec du ciment Portland et d'une faible concentration en argile crue (US5693137). Néanmoins les formulations proposées dans ces documents comportent toujours des concentrations très élevées (>80%) de cendres volantes et ils ne proposent pas de matériaux de construction à prise rapide et réellement bas carbone.

Il a également été proposé de réaliser des briques à partir d'argile crue (EP0184477). Toutefois, dans ce procédé les briques doivent subir deux traitements thermiques dont un traitement thermique à une température de l'ordre de 120°C pendant une durée de 3 à 12 heures. Un tel procédé de chauffage nuit au bilan carbone des briques ainsi préparées. D'autres propositions ont été faites pour des procédés de fabrication d'élément préfabriqué à base d'argile mais ces procédés reposent généralement sur l'utilisation d'argiles calcinées ce qui induit une dégradation forte du bilan carbone associé à ces matériaux.

Ainsi, il existe un besoin pour de nouveaux procédés de préparation d'éléments de préfabrication préparés à partir d'un liant à prise rapide présentant une faible empreinte carbone et présentant, à des temps de cure de vingt heures ou moins, des propriétés mécaniques des bétons au moins équivalentes voire supérieures aux propriétés mécaniques des bétons issus des ciments couramment utilisés dans le domaine de la construction.

### [Problème technique]

L'invention a pour but de remédier aux inconvénients de l'art antérieur. En particulier, l'invention a pour but de proposer un procédé de fabrication permettant d'obtenir un matériau de construction aux propriétés mécaniques au moins équivalentes au ciment Portland pour un temps de cure inférieur à vingt heures. Un tel procédé permet de diminuer l'émission de gaz à effets de serre, tel que le dioxyde de carbone émis lors de la préparation d'un tel matériau de construction, tout en préservant les caractéristiques mécaniques adaptées dudit matériau relative à son utilisation dans le domaine de la construction.

### [Brève description de l'invention]

Ainsi, l'invention porte notamment sur un procédé de réalisation d'un élément de préfabrication préparé à partir d'un liant de construction, ledit liant de construction comportant une composition d'activation alcaline et une composition de silicate et d'oxydes métalliques ; des granulats et de l'eau, ledit procédé comprenant :
- une étape de mélange des constituants du liant de construction avec les granulats et l'eau, et
- une étape de cure du mélange pendant au moins 2 heures ;
ledit procédé étant caractérisé en ce que le liant de construction comporte en outre une matrice argileuse crue, ladite matrice argileuse crue comportant de la kaolinite et/ou de l'illite ; et
en ce que l'étape de cure comporte un traitement thermique du mélange et/ou le liant de construction comporte en outre un agent défloculant.

De façon préférée, le traitement thermique ne comporte pas de traitement thermique d'au moins 2 heures à une température supérieure à 110 °C. En effet, un tel traitement thermique à haute température aurait un impact négatif sur l'empreinte carbone de l'élément préfabriqué.

Un tel procédé permet la fabrication d'éléments de préfabrication préparés à partir d'un liant à prise rapide adaptés présentant une faible empreinte carbone. En outre, ces éléments de préfabrication peuvent présenter après des temps de cure de vingt heures ou moins, des propriétés mécaniques des bétons au moins équivalentes voire supérieures aux propriétés mécaniques des bétons issus des ciments couramment utilisés dans le domaine de la construction.

De plus, la présence d'une matrice argileuse crue peut apporter un confort hygrothermique aux utilisateurs des constructions intégrant ces éléments de préfabrication. Le mélange du liant de construction avec des granulats et de l'eau permet d'obtenir un matériau de construction.

En outre, le recours à une étape de cure permet une prise rapide adaptée à la fabrication d'éléments de préfabrication.

**Selon d'autres caractéristiques optionnelles du procédé, ce dernier peut inclure facultativement une ou plusieurs des caractéristiques suivantes, seules ou en combinaison :**
- l'étape de cure comporte un traitement thermique réalisé à une température supérieure à 25°C, de préférence supérieure à 30°C. Un traitement thermique permettra une prise plus rapide de ce liant à base d'argile crue et lui permettra dans certains cas d'atteindre des niveaux de résistance mécanique attendus en 20 heures ou moins. En outre, l'étape de cure peut être réalisée dans un moule hermétique.
- l'étape de cure comporte un traitement thermique, ledit traitement thermique étant réalisé pendant au moins 2 heures à une température inférieure à 110°C, de préférence inférieure à 100°C, de façon plus préférée inférieure ou égale à 90°C, de façon encore plus préférée inférieure ou égale à 80°C. Un tel traitement permet d'atteindre un niveau souhaité de résistance mécanique et de prise rapide tout en réduisant l'empreinte carbone de l'élément préfabriqué.
- le liant de construction comporte un agent défloculant, ledit défloculant étant un défloculant organique. L'utilisation d'un défloculant organique permet d'améliorer les propriétés de l'élément préfabriqué par rapport à un défloculant inorganique.
- il comporte une étape de coulage du mélange obtenu dans un moule, de préférence ledit moule étant un moule hermétique agencé pour limiter les échanges gazeux entre le mélange et l'air extérieur. L'utilisation d'un moule hermétique permet d'améliorer les propriétés de l'élément préfabriqué.
- il comporte, après l'étape de cure, une étape de déplacement du moule, ladite étape de déplacement du moule étant réalisée au plus 24 heures après l'étape de coulage, de préférence au plus 20 heures après l'étape de coulage. Cela permet d'améliorer le processus industriel de fabrication de l'élément préfabriqué.
- il comporte, après l'étape de déplacement du moule, une étape de maturation au cours de laquelle le mélange ayant subi l'étape de cure est laissé en moule pour une durée de vie en moule supérieure ou égale à 48 heures de préférence supérieure ou égale à 72 h de façon plus préférée supérieure ou égale à 96h. Cela permet d'améliorer les propriétés de l'élément préfabriqué.
- l'agent défloculant représente de 0,1 % à 10% en poids sec du liant de construction. En présence d'argile crue, la présence d'un agent défloculant permet une prise rapide du liant de construction.
- l'agent défloculant peut être sélectionné parmi :
   - un surfactant non-ionique tel qu'un éther de polyoxyéthylène ;
   - un agent anionique tel qu'un agent anionique sélectionné parmi : des sulfonates d'alkylaryle, des aminoalcool, des acides gras, des humates (e.g. humates de sodium), des acides carboxyliques, des lignosulfonates (e.g. lignosulfonates de sodium), des polyacrylates, des carboxyméthylcelluloses et leurs mélanges ;
   - un polyacrylate tel qu'un polyacrylate sélectionné parmi du polyacrylate de sodium ou du polyacrylate d'ammonium ;
   - une amine telle qu'une amine sélectionnée parmi : les 2-amino-2-methyl-1-propanol ; mono-, di- ou triethanolamine ; les isopropanolamines (1-amino-2-propanol, diisopropanolamine et triisopropanolamine) et les éthanolamines N-alkylées ; ou
   - leurs mélanges. Ces agents défloculant permettent d'améliorer les propriétés de l'élément préfabriqué.
- la matrice argileuse crue représente de 10 % à 49 % en poids sec du liant de construction, de préférence de 25 % à 40 % en poids sec du liant de construction. Une concentration élevée en argile crue permet d'améliorer l'empreinte carbone et les propriétés hygrothermiques du matériau.
- la matrice argileuse crue comporte en outre une autre argile comme par exemple de la Montmorillonite et/ou de la Bentonite. En effet, la matrice argileuse crue comportera de la kaolinite et/ou de l'illite mais pourra aussi comporter d'autres argiles en fonction des propriétés attendues pour le liant de construction.
- la composition d'activation alcaline représente de 2 % à 50 % en poids sec du liant de construction, de préférence de 2 % à 10 % en poids sec ou de 20 % à 40 % en poids sec du liant de construction. En fonction des typologies de composition d'activation alcaline, une quantité plus ou moins importante pourra être utilisée. La variation de concentration de composition d'activation alcaline pourra aussi influer sur les propriétés attendues pour le liant de construction.
- la composition d'activation alcaline comporte des sulfates, des carbonates, des silicates, des hydroxydes, des lactates ou leur combinaison. Ces composés permettent d'obtenir les meilleures performances en termes de résistance mécanique et temps de prise. De façon préférée, la composition d'activation alcaline comporte des carbonates et/ou des hydroxydes.
- la composition de silicate et d'oxydes métalliques représente au plus 70 % en poids sec du liant de construction. L'absence d'une concentration très élevée de composition de silicate et d'oxydes métalliques permet de limiter l'utilisation de ces déchets/coproduits ayant un impact sur le bilan carbone du liant de construction.
- la composition de silicate et d'oxydes métalliques représente de 20 % à 70 % en poids sec du liant de construction, de préférence de 30 % à 45 % en poids sec ou de 55 % à 70 % en poids sec du liant de construction. En fonction des typologies de composition d'activation alcaline, une quantité plus ou moins importante pourra être utilisée. La variation de concentration de composition de silicate et d'oxydes métalliques pourra aussi influer sur les propriétés attendues pour le liant de construction.
- la composition de silicate et d'oxydes métalliques est sélectionnée parmi des laitiers de hauts fourneaux, des pouzzolanes telles que des cendres volcaniques, des cendres volantes, de la fumée de silice, des cendres de matières végétales telles que des cendres de riz, des résidus de bauxite (aussi appelés boues rouges) et leurs combinaisons. Ces compositions sont particulièrement intéressantes pour atteindre rapidement des valeurs de résistance mécanique élevées.
- l'élément de préfabrication présente une résistance minimale à la compression sur cylindres, telle que mesurée par la norme NF EN 206-1, supérieure ou égale à 16 MPa après une durée d'étape de cure inférieure ou égale à 20 heures. En particulier, l'élément de préfabrication présente une résistance minimale à la compression sur cylindres à 20 heures telle que mesurée par la norme NF EN 206-1 supérieure ou égale à 16 MPa. Une telle résistance à la compression permet de démouler l'élément de préfabrication après 20 heures au plus de cure et donc permet d'optimiser les processus de fabrication. Ainsi il peut être considéré que le liant de construction est un liant de construction à prise rapide.
- le traitement thermique du mélange est réalisé à une température allant de 30°C à 90°C, de préférence à une température allant de 30°C à 80°C, ou de manière plus préférée à une température allant de 30°C à 70°C. Ces gammes de température permettent d'obtenir les meilleures propriétés, notamment de résistance mécanique, pour l'élément préfabriqué.

L'invention porte en outre sur un élément de préfabrication préparé selon un procédé conforme à l'invention.

Un tel matériau de construction présentera une prise rapide c'est-à-dire qu'il pourra atteindre une résistance mécanique supérieure ou égale à 16 MPa en 20 heures ou moins d'étape de cure. Ainsi, un tel matériau de construction à prise rapide pourra avantageusement prendre la forme d'un élément de préfabrication. Comme le liant, il bénéficiera d'une empreinte carbone faible et de propriétés hygrothermiques associées à la présence d'argile crue.

D'autres avantages et caractéristiques de l'invention apparaitront à la lecture de la description suivante donnée à titre d'exemple illustratif et non limitatif, en référence à la figure annexée.

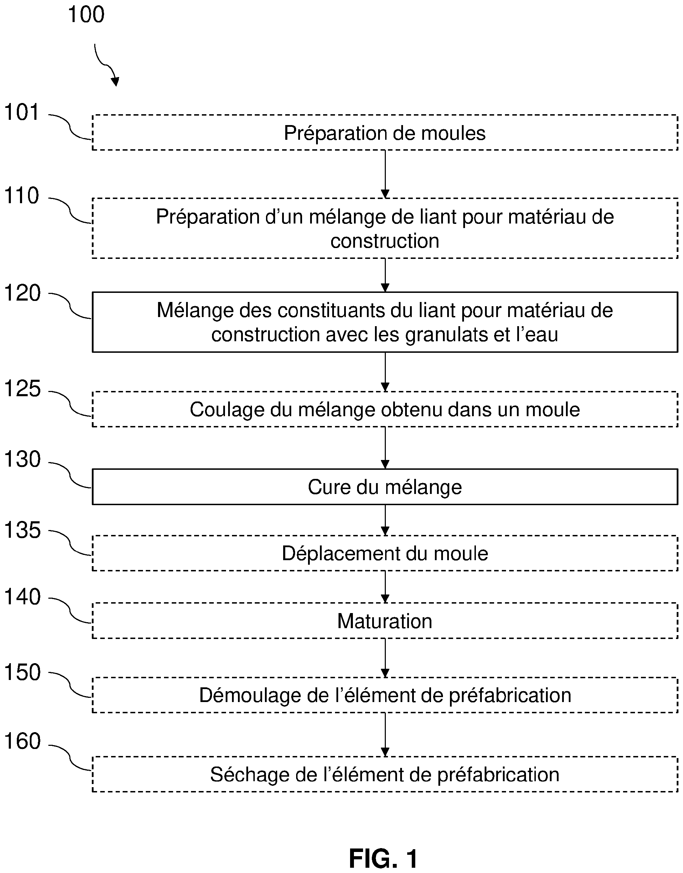

La figure 1 représente un schéma d'un procédé selon un mode de réalisation de l'invention ; les étapes en pointillées sont facultatives.

Sur la figure, les blocs illustrent l'architecture et le fonctionnement d'implémentations possibles de procédés selon divers modes de réalisation de la présente invention Dans certaines implémentations, les fonctions associées aux blocs peuvent apparaître dans un ordre différent que celui indiqué sur la figure. Par exemple, deux blocs montrés successivement peuvent, en fait, être réalisés sensiblement simultanément, ou les blocs peuvent parfois être exécutés dans l'ordre inverse. Chaque bloc de l'organigramme peut être mis en œuvre par des systèmes matériels spéciaux qui exécutent les fonctions ou actes spécifiés ou effectuer des combinaisons de matériel spécial.

### [Description détaillée]

Dans la suite de la description, le terme « % en poids » en lien avec la matrice argileuse crue, le liant de construction ou le matériau de construction doit être compris comme étant une proportion par rapport au poids sec de la matrice argileuse crue, du liant de construction ou du matériau de construction. Le poids sec correspond au poids avant l'addition d'eau par exemple nécessaire à la formation d'un matériau de construction. Lorsque les valeurs de % en poids sont données sous la forme d'intervalles, les bornes sont comprises.

Le terme « Déshydratée » au sens de l'invention correspond à une formulation comportant une quantité d'eau réduite et par exemple une teneur en eau inférieure à 20 % en poids, de préférence inférieure à 10 %, de façon plus préférée inférieure à 5 %, de façon encore plus préférée inférieure à 2% et par exemple inférieure à 1 % en poids. La teneur en eau peut être mesurée par toute méthode connue de l'état de la technique. Elle peut par exemple être mesurée selon la norme NF P 94 050 de septembre 1995 « Détermination de la teneur en eau pondérale des matériaux : Méthode par étuvage ».

On entend par « matrice argileuse », un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, ou leurs mélanges. L'expression « matrice argileuse crue » correspond au sens de l'invention à une matrice argileuse n'ayant pas subi d'étape de calcination. En particulier, c'est-à-dire qu'elle a fait l'objet d'aucun traitement thermique préalable. Par exemple, cela correspond à une matrice argileuse n'ayant pas subit une montée en température supérieure à 300°C, de préférence supérieure à 200°C et plus préférentiellement une température supérieure à 150°C. En effet, la matrice argileuse crue peut subir une étape de chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges.

L'expression « élément de préfabrication » au sens de l'invention peut correspondre à des éléments de construction ayant fait l'objet d'une étape de cure tels que des éléments de type bloc de béton pouvant être combinés de façon modulaire pour fabriquer un bâtiment. Ces éléments de préfabrication peuvent comporter une armature (ex. : poutrelles, panneaux, escaliers) ou non (ex. : blocs, entrevous, tuiles).

Au sens de l'invention, un « agent défloculant » ou « agent de défloculation », peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage.

On entend par « composition d'activation alcaline », toute composition ayant pour fonction d'accélérer la formation d'une structure compacte, augmentant ainsi la résistance mécanique des matériaux incorporant une telle composition d'activation. En particulier, une composition d'activation alcaline comporte au moins une base, telle qu'une base faible ou une base forte. L'expression « composition de silicate et d'oxydes métalliques » peut se référer au sens de l'invention à une composition comportant des silicates et des oxydes métalliques tels que des aluminates.

En particulier, la composition de silicate et d'oxydes métalliques comporte plus de 20% en poids sec de silicate, de préférence plus de 30 % en poids sec de silicate, de façon plus préférée plus de 40 % en poids sec de silicate et de façon encore plus préférée plus de 50 % en poids sec. En particulier, la composition de silicate et d'oxydes métalliques comporte plus de 5 % en poids sec d'oxydes métalliques, de préférence plus de 7,5 % en poids sec d'oxydes métalliques, de façon plus préférée plus de 10 % en poids sec d'oxydes métalliques et de façon encore plus préférée plus de 15 % en poids sec d'oxydes métalliques. Par exemple, la composition de silicate et d'oxydes métalliques comporte plus de 2 % en poids d'aluminate, de préférence plus de 5 % en poids d'aluminate, de façon plus préférée plus de 7% en poids d'aluminate et de façon encore plus préférée plus de 10 % en poids d'aluminate. En outre, la composition de silicate et d'oxydes métalliques peut comporter des espèces chimiques n'étant ni des silicates ni des oxydes métalliques. Par exemple, la composition de silicate et d'oxydes métalliques peut comporter plus de 10 % en poids d'oxyde de calcium, de préférence plus 20 % en poids d'oxyde de calcium, de façon plus préférée plus 25 % en poids d'oxyde de calcium et de façon encore plus préférée plus de 30 % en poids d'oxyde de calcium. Ces concentrations massiques peuvent être aisément mesurées par l'homme du métier utilisant les techniques classiques de dosage des silicates et oxydes métalliques.

En particulier, l'expression « composition de silicate et d'oxydes métalliques » se réfère à une composition comportant plus de 50%, de préférence plus de 70%, de façon plus préférée plus de 80% et de façon encore plus préférée plus de 90% de silicates et d'oxydes métalliques dont des aluminates. De préférence, une composition de silicate et d'oxydes métalliques correspondra à un laitier issu de la métallurgie, tel qu'un laitier de haut fourneaux ou encore à des cendres volantes.

Comme cela sera détaillé par la suite, la « composition de silicate et d'oxydes métalliques » est une composition calcinée. C'est-à-dire qu'elle a subi une étape à haute température. Cette étape à haute température peut être naturelle ou artificielle, dans ce cas, il s'agit d'un traitement à haute température. L'étape à haute température peut par exemple correspondre à un traitement à une température supérieure ou égale à 500°C, de préférence supérieure ou égale à 750°C et de façon plus préférée supérieure ou égale à 900°C ; et de façon encore plus préférée supérieure à 1000°C.

Le terme « liant » ou « liant de construction » peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres granulats avec les constituants du liant. Un liant peut en particulier correspondre à un liant hydraulique, c'est-à-dire que le durcissement se fait au contact de l'eau.

Un matériau de construction correspond généralement à des éléments comportant les constituants du liant ainsi que des granulats et autres additifs. En particulier, un matériau de construction au sens de l'invention répond aux critères de la norme NF EN 206-1. Il peut prendre différentes formes telles que du mortier, du béton ou des éléments préfabriqués tels que des blocs-béton. Un matériau de construction à prise rapide peut en particulier prendre la forme d'un matériau de construction qui, 20 heures après l'ajout d'eau, présente une résistance minimale à la compression sur cylindres telle que mesurée par la norme NF EN 206-1 supérieure ou égale à 16 MPa.

L'expression « ciment Portland » correspond à un liant hydraulique composé principalement de clinker dont la prise et le durcissement est rendue possible par une réaction chimique avec de l'eau. Le ciment Portland contient généralement au moins 95% de clinker et au maximum 5% de constituants secondaires tels que des alcalis (Na₂O, K₂O), de la magnésie (MgO), du gypse (CaSO₄ · 2 H₂O) ou encore diverses traces de métaux.

Le terme « sensiblement égale » au sens de l'invention correspond à une valeur variant de moins de 20 % par rapport à la valeur comparée, de préférence de moins de 10 %, de façon encore plus préférée de moins de 5 %.

L'expression « terre argileuse excavée » correspond au sens de l'invention à une terre argileuse obtenue suite à une étape où le sol a été creusé par exemple au cours d'opérations de régalements et/ou de terrassements, en vue de construire, bâtir ou remblayer. En particulier, au sens de l'invention, la terre argileuse excavée peut être ou non déplacée hors du site de production. De façon préférée et selon un avantage de l'invention, la terre excavée est utilisée sur le site de production ou à une distance inférieure à 200 km, de préférence inférieure à 50 km. En outre, avantageusement, la terre argileuse excavée dans le cadre de l'invention est une terre argileuse excavée crue, c'est-à-dire qu'elle n'a pas subi d'étape de calcination. En particulier, c'est-à-dire qu'elle n'a fait l'objet d'aucun traitement thermique préalable. Par exemple, cela correspond à une terre argileuse n'ayant pas subit une montée en température supérieure à 300°C, de préférence supérieure à 200°C et plus préférentiellement une température supérieure à 150°C. En effet, la terre argileuse crue peut subir une étape de chauffage nécessitant une montée en température généralement de sensiblement égale à 150°C mais pas d'étape de calcination. Une étape de calcination pourra par exemple correspondre à un traitement thermique à plus de 600°C pendant au moins une heure. L'argile telle qu'utilisée conventionnellement présente un profil granulométrique relativement constant avec des tailles inférieures à 2 µm. Une terre argileuse excavée peut présenter différents profils granulométriques. Dans le cadre de l'invention, une terre argileuse excavée pourra comporter des particules de taille supérieure à 2 µm, de préférence supérieure à 20 µm, de préférence supérieure à 50 µm et par exemple supérieure à 75 µm telle que déterminée selon la norme ASTM D422-63. De préférence, la terre argileuse excavée ne comporte pas de granulat de taille supérieure à 2 cm telle que déterminée selon la norme NF EN 933-1.

Le domaine de la construction se doit d'évoluer pour augmenter sa productivité tout en répondant aux nouveaux enjeux sociétaux. Les industriels ont proposé dans ce contexte des mélanges de ciments dit plus écologiques comportant par exemple 50% de ciment Portland, 30% laitiers et 20% de cendres volantes ; il a aussi été proposé des bétons hautes performance pouvant comporter des super plastifiants, tels que les bétons autoplaçants. Néanmoins, ces solutions ne permettent pas d'allier la productivité (i.e. rapidité de prise et résistance mécanique) avec une réduction notable du bilan carbone et un confort pour les utilisateurs.

Pour répondre à cela, les inventeurs ont mis au point un nouveau procédé impliquant de nouvelles formulations de liant de construction. Cette nouvelle solution présente l'avantage de posséder une empreinte carbone au moins deux fois plus basse que la plupart des liants de construction, ou liant hydraulique, les plus utilisés au monde aujourd'hui (e.g. Ciment Portland). En outre, ces nouvelles formulations de liant assurent une prise rapide du matériau de construction. A cet effet, un procédé selon l'invention utilise des liants comportant une matrice argileuse crue particulière, n'ayant pas subi d'étape de calcination, étape énergivore générant en outre l'émission de gaz à effet de serre et plus particulièrement de dioxyde de carbone.

En particulier, comme cela sera présenté dans les exemples, un procédé selon l'invention permet de fabriquer des éléments préfabriqués à partir d'un liant comportant une concentration élevée de matrice argileuse crue (généralement supérieure à 10%) et présentant une prise rapide.

Ainsi, **selon un premier aspect,** l'invention porte sur un **procédé de réalisation d'un élément de préfabrication.**

L'élément de préfabrication est en particulier préparé à partir d'un liant de construction comportant une composition d'activation alcaline et une composition de silicate et d'oxydes métalliques, des granulats et de l'eau.

Comme illustré à la **figure 1**, un procédé 100 selon l'invention comporte les étapes suivantes : une étape de mélange 120 des constituants du liant de construction avec les granulats et l'eau, et une étape de cure 130 du mélange.

Comme illustré, le procédé selon l'invention peut également comporter des étapes de préparation 101 de moules, préparation 110 d'un mélange de liant de construction, démoulage 140 de l'élément de préfabrication et de séchage 150 de l'élément de préfabrication.

Avantageusement, dans le cadre d'un procédé de réalisation d'un élément de préfabrication selon l'invention, le liant de construction comporte en outre une matrice argileuse crue. L'argile crue est un constituant aux propriétés recherchées en termes de bilan carbone et de confort hygrothermique. Néanmoins, lorsque l'argile crue est présente à des concentrations élevées (e.g. > 10%) les matériaux de construction présentent généralement des résistances mécaniques faibles et une prise lente.

Or, comme cela sera illustré dans les exemples, les inventeurs ont déterminé des sélections d'argiles et des conditions d'utilisation permettant d'obtenir des matériaux de construction permettant des niveaux élevés de résistance mécanique et une prise rapide malgré des niveaux élevés d'argile crue. En particulier, dans les conditions sélectionnées, la matrice argileuse peut être présente à plus de 10% en poids du liant de construction.

Ainsi, il est possible d'obtenir des matériaux pouvant présenter des propriétés hygrothermiques intéressantes, un bilan carbone bas tout en respectant les exigences de productivités de l'industrie de la construction.

En particulier, comme cela sera illustré dans les exemples, la matrice argileuse crue comporte de la kaolinite et/ou de l'illite. C'est lorsque la matrice argileuse crue comporte ces argiles (une ou plusieurs) que les meilleurs résultats en termes de rapidité de prise et de résistance mécanique à 20 heures sont obtenus.

Outre le choix des argiles à utiliser, les inventeurs ont déterminé que pour obtenir un matériau de construction à prise rapide particulièrement intéressant pour l'augmentation de la productivité du secteur, notamment utilisé pour former un élément de préfabrication, il est nécessaire d'ajouter un agent défloculant et/ou de réaliser un traitement thermique.

Ainsi, de façon avantageuse, dans le cadre d'un procédé de réalisation d'un élément de préfabrication selon l'invention, le liant de construction comporte en outre un agent défloculant. En effet, comme cela est montré dans les exemples, la combinaison de la présence d'un agent défloculant et des argiles de type kaolinite et/ou de l'illite permet d'obtenir un matériau de construction à prise rapide.

De même, de façon avantageuse, dans le cadre d'un procédé 100 de réalisation d'un élément de préfabrication selon l'invention, l'étape de cure 130 comporte un traitement thermique du mélange. En effet, comme cela est montré dans les exemples, la combinaison de la réalisation d'un traitement thermique et de la présence d'argiles de type kaolinite et/ou de l'illite permet d'obtenir un matériau de construction à prise rapide.

Comme mentionné et illustré à la figure 1, un procédé 100 de réalisation d'un élément de préfabrication selon l'invention peut inclure des étapes de préparation de moules 101, avec par exemple l'utilisation d'agent de démoulage et d'huile de décoffrage, l'utilisation de calles pour le ferraillage, ou encore l'utilisation de systèmes permettant une couverture hermétique des pièces.

En outre, le procédé selon l'invention peut comporter une première étape de préparation 110 d'un mélange de liant de construction. L'étape de préparation 110 du mélange de liant de construction peut par exemple comporter un mélange à sec. En effet, une majorité ou la totalité des constituants du liant de construction pourront être utilisés sous forme déshydratée. Alternativement, une partie des constituants peut être mélangée à sec tandis qu'une autre partie des constituants est ajoutée sous forme liquide.

En particulier, le procédé selon l'invention comporte une étape de mélange 120 des constituants du liant de construction avec les granulats et l'eau.

Le rapport massique eau sur matières sèches de la composition, dénommée ici liant de construction, est de préférence contrôlé. Le ratio massique eau / matières sèches est de préférence inférieure à 1, de façon plus préférée inférieure ou égale à 0,6 et de façon encore plus préférée inférieure ou égale à 0,5. Ce ratio ne prend pas en compte la quantité de granulats ajoutée.

Une telle étape de mélange peut avantageusement mais non limitativement être réalisée dans un dispositif sélectionné parmi : un malaxeur et un camion toupie ou plus généralement au sein de tout dispositif adapté pour mélanger un liant de construction. Un dispositif de dispersion à l'aide par exemple d'ultrasons peut en outre être utilisé.

En outre, l'étape de mélange 120 peut être réalisée sur une durée d'au plus 24 heures, de préférence d'au plus 12 heures, de façon plus préférée d'au plus 6 heures. Avantageusement, dans le cadre d'un procédé 100 de fabrication d'un élément de préfabrication, elle peut être de seulement plusieurs dizaines de minutes et donc inférieure à une heure ou même de quelques dizaines de secondes. En effet, les mélanges peuvent être réalisés dans le cadre d'une fabrication sur presse, vibrante ou non, où le mélange est réalisé quelques secondes avant le remplissage des moules.

En particulier, le procédé selon l'invention pourra comporter une étape de coulage 125 du mélange obtenu dans un moule. Comme cela a été mentionné, le moule utilisé est de préférence un moule hermétique. C'est-à-dire qu'il est agencé de façon à pouvoir réduire les échanges gazeux entre le mélange et l'air extérieur. Il permet notamment de limiter l'évaporation. Un moule hermétique sera en particulier agencé pour, une fois en utilisation, empêcher une perte de fluide sur une durée de 24h au moins.

Avant l'étape de cure 130, pendant ou avant l'étape de mélange 120, le procédé 100 selon l'invention peut comporter l'ajout d'additifs ou de matériaux permettant de modifier les propriétés mécaniques du matériau de construction final.

Ainsi, le procédé peut également comporter l'ajout d'un plastifiant ou d'un superplastifiant.

Le procédé 100 peut également comporter l'ajout de fibres. Les fibres sont par exemple sélectionnées parmi : des fibres végétales telles que des fibres de coton de lin, de chanvre, de cellulose, de bambou, de miscanthus, des fibres synthétiques telles que des fibres métalliques, de verre, de carbone, de polypropylène et leurs mélanges. La présence de fibres permet avantageusement la formation d'un matériau de construction aux propriétés mécaniques et isolantes améliorées.

Le procédé 100 peut également comporter l'ajout d'agrégats. Les agrégats sont par exemple sélectionnés parmi : des graviers, du béton concassé, recyclé et leurs mélanges.

Le procédé 100 peut également comporter l'ajout d'additif. L'additif est par exemple sélectionné parmi : un agent de maintien rhéologique synthétique ou naturel, un agent anti-retrait, un agent rétenteur d'eau, un agent entraîneur d'air, une résine synthétique et leurs mélanges.

Le procédé 100 selon l'invention comporte également une étape de cure 130 du mélange. L'étape de cure 130 est généralement connue de l'homme du métier qui saura la mettre en place. Elle peut par exemple être réalisée soit par le maintien des produits dans des chambres de durcissement, soit avec bâchage ou encore avec pulvérisation d'eau ou de produits de cure.

L'étape de cure 130 dure de préférence au plus 48 heures, de préférence au plus 24 heures et elle peut être sensiblement égale à 20 heures. L'étape de cure 130 dure généralement au moins deux heures, de préférence au moins six heures et de façon plus préférée au moins 12 heures.

De façon préférée, dans le cadre de l'invention, l'étape de cure 130 est réalisée dans un moule hermétique. Le moule hermétique permet avantageusement de limiter ou supprimer les échanges entre le mélange et l'air extérieur.

De façon préférée, le traitement thermique est réalisé à une température supérieure à 25°C, de préférence supérieure à 30°C. Toutefois, de façon à respecter un bilan énergétique favorable, le traitement thermique, pouvant être réalisé dans le cadre de l'étape de cure, est réalisé à une température inférieure à 100°C, de préférence inférieure ou égale à 80°C. Par exemple, le traitement thermique est réalisé à une température comprise en 20°C et 90°C, de façon préférée l'étape de cure thermique est réalisée à une température comprise en 25°C et 80°C ; de façon encore plus préférée entre 25°C et 65°C. En outre, le traitement thermique peut être réalisé sur l'intégralité de l'étape de cure mais également sur une période plus courte. Ainsi, de façon préférée, le traitement thermique est réalisé sur une durée inférieure à 20 heures, de façon plus préférée inférieure à 15 heures, et de façon encore plus préférée inférieure à 10 heures.

De façon avantageuse, le procédé selon l'invention comporte une étape de déplacement du moule 135, ladite étape de déplacement du moule 135 étant réalisée au plus 24 heures après l'étape de coulage 125, de préférence au plus 20 heures après le coulage. Un tel déplacement, en particulier opéré après l'étape de cure 130, est permis par la capacité offerte par la présente invention d'obtenir en moins de 20h une résistance minimale à la compression sur cylindres supérieure ou égale à 16 MPa.

En outre, le procédé comporte de façon préférée, après l'étape de déplacement du moule 135, une étape de maturation 140. Lors de l'étape de maturation 140, le mélange ayant subi l'étape de cure 130 est laissé en moule pour une durée de vie en moule supérieure ou égale à 48 heures de préférence supérieure ou égale à 72 h de façon plus préférée supérieure ou égale à 96h. La durée de vie en moule correspond à la durée entre le coulage du mélange dans le moule et le décoffrage (i.e. démoulage).

Lors de cette étape de maturation, le moule pourra avantageusement être conservé immobile, conservé fermé de façon à maintenir l'interface béton-extérieure constante.

Ainsi le mélange curé sera soumis à des conditions de pression et/ou d'humidité sensiblement constante.

D'après les développements menés par les inventeurs une telle étape de maturation 140 permet étonnamment d'améliorer la qualité de l'élément préfabriqué sur plusieurs aspects incluant la résistance mécanique et le retrait.

Ainsi, alors que dans les procédés industriels classiques il est préférable de réduire au maximum le temps avant le démoulage, ici dans la présente invention, les inventeurs proposent de réaliser une étape de maturation d'au moins 24h, de préférence d'au moins 48h, de façon plus préférée d'au moins 72h et par exemple d'au moins 96h. Cela permet d'améliorer la qualité de l'élément préfabriqué

Ainsi, dans le cadre d'une procédé selon l'invention le mélange pourra être coulé, déplacé dans une étuve de façon à subir un traitement thermique dans le cadre d'une cure, déplacé moins de 24h après le coulage dans un espace permettant la maturation. L'élément préfabriqué sera ensuite démoulé et stocké avant utilisation.

Comme illustré à la figure 1, le procédé selon l'invention peut comporter une étape de démoulage 150 de l'élément de préfabrication. L'étape de démoulage 150 est généralement connue de l'homme du métier qui saura la mettre en place. Cette étape est notamment facilitée par les éventuelles étapes de préparation des moules, avec par exemple l'utilisation d'agent de démoulage et d'huile de décoffrage, l'utilisation de calles pour le ferraillage, ou encore l'utilisation de systèmes permettant une couverture hermétique des pièces.

Enfin, le procédé selon l'invention peut comporter une étape de séchage 160 de l'élément de préfabrication. L'étape de séchage 160 est généralement connue de l'homme du métier qui saura la mettre en place. Cette étape peut avoir lieu dans des conditions particulières, notamment à l'abri du vent, du gel et du soleil par exemple.

Dans le cadre des différents modes de réalisation et caractéristiques de la présente invention, les inventeurs ont été en mesure, pour la première fois, d'obtenir un élément de préfabrication ou un matériau de construction à prise rapide présentant une résistance minimale à la compression sur cylindres, après 20 heures ou moins d'étape de cure, telle que mesurée par la norme NF EN 206-1 supérieure ou égale à 16 MPa, de préférence supérieure ou égale à 18 MPa, de façon plus préférée supérieure ou égale à 20 MPa.

Dans la suite seront décrit différents modes de réalisation plus ou moins avantageux et notamment des caractéristiques concernant les principaux constituants du liant de construction : la matrice argileuse crue, l'agent défloculant, la composition d'activation alcaline et la composition de silicate et d'oxydes métalliques.

Un procédé de réalisation selon l'invention peut incorporer les modes de réalisation du liant de construction, qu'ils soient ou non avantageux, particuliers ou préférés, notamment des caractéristiques concernant les principaux constituants du liant de construction : la matrice argileuse crue, l'agent défloculant, la composition d'activation et la composition de silicate et d'oxydes métalliques.

### Matrice argileuse crue

Comme cela a été mentionné, la matrice argileuse crue comporte de la kaolinite et/ou de l'illite.

En effet, les inventeurs ont montré que, si la matrice argileuse crue comporte au moins une argile crue de type kaolinite et/ou illite, alors le liant de construction permet la préparation de matériaux de construction alliant propriétés mécaniques et prise rapide.

Toutefois, les micas semblent aussi permettre la préparation de matériaux de construction alliant propriétés mécaniques et prise rapide. Ainsi, bien que la présente invention soit décrite en lien avec la présence de kaolinite et/ou d'illite dans la matrice argileuse crue, la présente invention concerne également une matrice argileuse crue qui comporterait un ou plusieurs micas et optionnellement de la kaolinite et/ou de l'illite. Les micas comportent notamment la biotite, la muscovite, la séricite ou la lépidolite.

Le liant de construction pourra aussi comporter une autre argile crue comme des smectites telles que de la montmorillonite et/ou de la bentonite. En effet, il peut être avantageux de combiner plusieurs typologies d'argiles.

Dans le cadre de l'invention, la matrice argileuse crue représente de préférence au moins 10 % en poids du liant de construction, de façon plus préférée au moins 15 % en poids du liant de construction et de façon encore plus préférée au moins 25 % en poids du liant de construction. De façon préférée, le liant de construction comprend au moins 30 % en poids de matrice argileuse crue.

En particulier, la matrice argileuse crue représente de préférence de 10 % à 49 % en poids du liant de construction. De façon préférée, le liant de construction comprend de 15 % à 49 % en poids de matrice argileuse crue. De façon plus préférée, le liant de construction comprend de 20 % à 45 % en poids de matrice argileuse crue. De façon encore plus préférée, le liant de construction comprend de 25 % à 40 % en poids de matrice argileuse crue. Avantageusement, le liant de construction présente l'avantage de pouvoir comporter une quantité élevée de matrice argileuse crue (e.g. supérieur à 10%, de préférence supérieur à 20%) sans que cela ne vienne altérer les propriétés mécaniques des matériaux de construction permettant de réaliser des matériaux de construction, tels que des éléments préfabriqués, avec des performances mécaniques adaptées.

Comme cela a été mentionné, la matrice argileuse crue comporte de la kaolinite et/ou de l'illite. Avantageusement, l'argile crue de type kaolinite et/ou illite représente plus de 10 % en poids du liant de construction, de préférence au moins 20% en poids du liant de construction.

La matrice argileuse crue peut par exemple comporter au moins une espèce minérale sélectionnée parmi : Kaolinite, Illite, Smectite, Bentonite, Chlorite, Muscovite, Mica et Vermiculite. Cela inclut les argiles dites interstratifiées qui sont des combinaisons complexes de plusieurs argiles.

Le tableau 1 ci-dessous présente les caractéristiques chimiques de ces espèces minérales.

**[Tableau 1]**

| | | |
|---|---|---|
| Matrice Argileuse Crue | **Type d'argile** | **Composition** |
| | Illite | (K,H₃O)(Al,Mg,Fe)₂(Si,Al)₄O₁₀[(OH)₂,(H₂O)] |
| | Smectite / Montmorillonite | (Na,Ca)_{0,3}(Al,Mg)₂Si₄O₁₀(OH)₂, n H₂O |
| | Kaolinite | Al₂Si₂O₅(OH)₄ |
| | Bentonite | (Na,Ca)_{0,3}(Al,Mg)₂Si₄O₁₀(OH)₂ |

Par exemple, un liant de construction selon l'invention comprend au moins 10 % en poids de matrice argileuse crue, de façon préférée au moins 20 % en poids de matrice argileuse crue, de façon plus préférée au moins 30 % en poids de matrice argileuse crue et de façon encore plus préférée au moins 40 % en poids de matrice argileuse crue. Par exemple, au moins 50 % en poids de matrice argileuse crue ou au moins 60 % en poids de matrice argileuse crue.

En particulier, une matrice argileuse crue selon la présente invention pourra comporter au moins 25 % de kaolinite et/ou d'illite. Néanmoins, les matrices argileuses crues comportant une majorité de kaolinite et/ou d'illite auront la préférence dans le cadre de la présente invention. Cela peut par exemple correspondre à une matrice argileuse comportant plus de 25 % de kaolinite et plus de 25% d'illite, ou encore une matrice argileuse comportant plus de 40 % de kaolinite et plus de 10% d'illite. Ainsi, une matrice argileuse crue selon la présente invention comportera de préférence au moins 50% en poids sec de kaolinite et/ou d'illite, de façon plus préférée au moins 70% en poids sec de kaolinite et/ou d'illite.

En outre, de façon préférée, un liant de construction selon l'invention comprend au plus 80 % en poids de matrice argileuse crue, de façon plus préférée au plus 70 % en poids de matrice argileuse crue.

Ainsi, en particulier, un liant de construction selon l'invention peut comprendre entre 20 et 80 % en poids de matrice argileuse crue, de façon préférée entre 30 et 80 % en poids ou entre 40 et 80 % en poids de matrice argileuse crue, de façon plus préférée entre 40 et 70 % en poids de matrice argileuse crue.

En particulier, une matrice argileuse selon l'invention peut comprendre entre 20 et 80 % en poids de kaolinite et/ou d'illite, de façon préférée entre 30 et 70 % en poids de kaolinite et/ou d'illite ou entre 40 et 60 % en poids de kaolinite et/ou d'illite, de façon plus préférée entre 40 et 60 % en poids de kaolinite et/ou d'illite. Pour le calcul du poids il faut de préférence considérer le poids en kaolinite additionné au poids en illite pour déterminer si la matrice argileuse considérée correspond à une matrice argileuse selon l'invention.

La matrice argileuse pourra de façon préférée correspondre à une terre argileuse excavée, de préférence une terre argileuse excavée non calcinée, telle qu'une terre argileuse excavée crue . En particulier, dans ce cas, la matrice argileuse pourra comporter des particules de taille supérieure à 2 µm, de préférence supérieure à 20 µm, de préférence supérieure à 50 µm et par exemple supérieure à 75 µm telle que déterminée selon la norme ASTM D422-63. De préférence, la matrice argileuse ne comporte pas de granulat de taille supérieure à 2 cm telle que déterminée selon la norme NF EN 933-1.

La terre argileuse excavée pourra avantageusement avoir été prétraitée, ledit prétraitement étant sélectionné parmi : broyage, triage, tamisage et/ou séchage de la terre argileuse excavée. Le prétraitement peut par exemple comporter un fractionnement.

Avantageusement, la matrice argileuse pourra comporter au moins 2 % en poids de particules de limon, de préférence au moins 4 % en poids, de façon plus préférée au moins 6 % en poids. Les particules de limon sont en particulier des particules présentant un diamètre compris entre 2 µm et 50 µm.

Le liant de construction selon l'invention présente l'avantage de pouvoir comporter une quantité élevée de matrice argileuse crue sans que cela ne vienne altérer ni les propriétés de prise rapide, ni les propriétés mécaniques des matériaux de construction permettant de réaliser des matériaux de construction avec des performances mécaniques adaptées tout en présentant un temps de prise amélioré par rapport aux matériaux de construction couramment utilisés.

### Agent défloculant

De nombreux composés peuvent faire office d'agents défloculant et beaucoup sont généralement connus de l'homme du métier.

Dans le cadre de l'invention, l'agent défloculant est en particulier un surfactant non-ionique tel qu'un éther de polyoxyéthylène. L'éther de polyoxyéthylène peut par exemple être sélectionné parmi : un éther de lauryl poly(oxyéthylène).

L'agent défloculant peut aussi être un agent anionique tel qu'un surfactant anionique. En particulier, l'agent anionique peut être sélectionné parmi : des sulfonates d'alkylaryle, des aminoalcool, des acides gras, des humates (e.g. humates de sodium), des acides carboxyliques, des lignosulfonates (e.g. lignosulfonates de sodium), des polyacrylates, des carboxyméthylcelluloses et leurs mélanges.

L'agent défloculant peut aussi être un polyacrylate. Il peut alors être sélectionné par exemple parmi du polyacrylate de sodium et du polyacrylate d'ammonium.

L'agent défloculant peut également être une amine sélectionnée par exemple parmi : les 2-amino-2-methyl-1-propanol ; mono-, di- ou triethanolamine ; les isopropanolamines (1-amino-2-propanol, diisopropanolamine et triisopropanolamine) et N-alkylated ethanolamines. Alternativement, l'agent défloculant peut être un mélange de composés, tel qu'un mélange comportant au moins deux composés sélectionnés parmi : surfactant non-ionique, agent anionique, polyacrylate, amine et composé organophosphoré.

L'agent défloculant est de préférence un agent défloculant organique. Selon la présente invention, un agent défloculant organique comporte au moins un atome de carbone et de préférence au moins une liaison carbone-oxygène. De façon préférée, l'agent de défloculation organique est sélectionné parmi : un lignosulphonate (e.g. lignosulphonate de sodium), un polyacrylate, un humate, un polycarboxylate tel qu'un polycarboxylate d'ether, et leurs mélanges. De façon plus préférée, l'agent de défloculation comporte un humate, un lignosulphonate et/ou un polyacrylate.

L'utilisation d'un agent défloculant organique permet d'améliorer la résistance mécanique à la compression à des temps de cure plus courts.

L'agent défloculant est de préférence utilisé sous forme d'un sel. Cependant, l'invention ne saurait se limiter aux agents défloculant cités précédemment ou leurs sels. Cependant, l'invention ne saurait se limiter aux agents défloculants organiques cités précédemment. Tout type d'agent défloculant organique connu par l'homme du métier peut être utilisé en lieu et place desdits agents défloculant cités précédemment.

L'agent défloculant peut par exemple représenter de 0 % à 15 % en poids sec du liant de construction. En effet, dans le cadre d'un procédé selon l'invention, il peut y avoir absence d'agent défloculant. De façon préférée, l'agent défloculant représente de 0,1 % à 10% en poids sec du liant de construction. De façon encore plus préférée, l'agent défloculant représente de 1,5 % à 6% en poids sec du liant de construction.

En particulier, l'agent défloculant représente au moins 1 % en poids sec de la matrice argileuse crue, de préférence au moins 2 % en poids sec de la matrice argileuse crue, de façon plus préférée au moins 3 % en poids sec de la matrice argileuse crue, de façon encore plus préférée au moins 4 % en poids sec de la matrice argileuse crue, et par exemple au moins 5 % en poids sec de la matrice argileuse crue.

### Composition d'activation alcaline

Sans être limité par la théorie, la composition d'activation alcaline en combinaison avec la composition de silicate et d'oxydes métalliques, de préférence renforcé par l'agent défloculant, va permettre la constitution d'un réseau entre les feuillets d'argile qui apportera ses propriétés mécaniques au liant et/ou matériau de construction selon l'invention.

Une composition d'activation alcaline comporte au moins une base, telle qu'une base faible ou une base forte. La composition d'activation alcaline peut de préférence comporter un ou plusieurs composés présentant un pKa supérieur ou égal à 8, de façon plus préférée supérieur ou égal à 10, de façon plus préférée supérieur ou égal à 12, de façon encore plus préférée supérieur ou égal à 14.

Ainsi, la composition d'activation alcaline peut comporter des sulfates, des hydroxydes, des carbonates, des silicates, des lactates, des organophosphorés ou leurs combinaisons.

De façon préférée, la composition d'activation alcaline comporte des hydroxydes et des silicates. En particulier, la composition d'activation alcaline peut comporter un mélange d'hydroxyde de sodium et de silicate de sodium. Lorsque la composition d'activation alcaline comporte des silicates, le pourcentage de silicate dans le liant de construction provenant de la composition d'activation alcaline et le pourcentage de silicate dans le liant de construction provenant de la composition de silicate et d'oxydes métalliques sont comptabilisés séparément.

En particulier, la composition d'activation alcaline peut comporter un mélange de sulfate de sodium et de chlorure de sodium.

De façon préférée, la composition d'activation alcaline comporte des silicates et des carbonates. En particulier, la composition d'activation alcaline peut comporter un mélange de silicate de sodium ou de potassium et de carbonate de sodium ou de potassium.

De façon plus préférée, la composition d'activation alcaline comporte des hydroxydes.

Avantageusement, la composition d'activation comporte un oxyde d'un métal présentant au moins deux électrons de valence. En effet, dans une telle configuration, la valeur de tampon hydrique est améliorée par rapport à une composition d'activation alcaline à base de sulfates, hydroxydes, carbonates, lactates, organophosphorés ou leurs combinaisons. En particulier, la composition d'activation peut comporter au moins 40 % en poids d'au moins un oxyde métallique correspondant à l'oxyde d'un métal présentant au moins deux électrons de valence. Par exemple, les au moins 40% en poids peuvent correspondre à plusieurs oxydes métalliques différents. Toutefois de façon préférée, la composition d'activation, de préférence lorsque celle-ci est une composition d'activation alcaline, pourra comporter un seul oxyde d'un métal présentant au moins deux électrons de valence ou plus de 50% en poids de cet oxyde métallique.

De façon préférée, la composition d'activation comporte au moins 50 % en poids d'au moins un oxyde métallique correspondant à l'oxyde d'un métal, ou d'un alcalinoterreux, présentant au moins deux électrons de valence, de façon plus préférée au moins 60 % en poids ; de façon encore plus préférée au moins 80 % en poids.

La composition d'activation alcaline peut comporter un composé organophosphoré tel que le tripolyphosphate de sodium. De préférence le composé organophosphoré représente au moins 2% en poids du liant de construction.

De façon préférée, la composition d'activation alcaline comporte un lactate tel que du lactate de sodium, de potassium, et/ou de lithium.

La composition d'activation alcaline peut aussi comporter du ciment Portland.

Comme cela sera décrit ci-après, la composition d'activation peut être une composition liquide. En particulier, la composition d'activation peut être une composition aqueuse. Comme cela sera décrit par la suite, son utilisation peut être combinée à l'ajout d'eau lors de la formation d'un liant de construction. Néanmoins, alternativement, la composition d'activation se présente sous forme solide, par exemple sous forme de poudre. Le pourcentage indiqué de composition d'activation alcaline correspond au poids sec de la composition.

La composition d'activation est par exemple présente à une teneur d'au moins 2 % en poids sec du liant de construction.

De façon préférée, le liant de construction comprend de 2 % à 50 % en poids sec d'une composition d'activation alcaline. De façon plus préférée, le liant de construction comprend de 2 % à 40 % en poids sec d'une composition d'activation alcaline. De façon encore plus préférée, le liant de construction comprend de 10 % à 20 % d'une composition d'activation alcaline.

Comme cela sera illustré dans les exemples, la concentration en composition d'activation alcaline nécessaire peut largement varier en fonction de sa composition. Ainsi, le liant de construction pourra comprendre de 20 % à 40 % en poids d'une composition d'activation alcaline. C'est particulièrement le cas lorsque la composition d'activation alcaline comporte des hydroxydes et silicates. Alternativement, le liant construction pourra comprendre de 2 % à 10 % en poids sec d'une composition d'activation alcaline. C'est particulièrement le cas lorsque la composition d'activation alcaline comporte des carbonates.

### Composition d'aluminosilicates et d'oxydes métalliques

La composition de silicate et d'oxydes métalliques selon l'invention permettra, en combinaison avec la composition d'activation alcaline, de renforcer les liaisons entre les feuillets d'argile de façon à apporter ses propriétés mécaniques au liant.

Un liant de construction utilisé selon l'invention comporte de préférence moins de 15 % en poids de ciment Portland, de façon plus préférée moins de 10 % en poids, moins de 8 % en poids, moins de 5 % en poids, moins de 3 % en poids, moins de 2 % en poids et de façon encore plus préférée ne comporte pas de ciment Portland.

Une composition de silicate et d'oxydes métalliques comporte avantageusement des oxydes métalliques sélectionnés parmi : des oxydes de fer tels que FeO, Fe₃O₄, Fe₂O₃, l'alumine Al₂O₃, l'oxyde de manganèse(II) MnO, l'oxyde de titane(IV) TiO₂, l'oxyde de magnésium MgO et leurs mélanges.

Une composition de silicate et d'oxydes métalliques peut également comporter des aluminosilicates.

La composition de silicate et d'oxydes métalliques est par exemple sélectionnée parmi des laitiers de hauts fourneaux, des pouzzolanes telles que des cendres volcaniques, des cendres volantes, de la fumée de silice ou du métakaolin, des cendres de matières végétales telles que des cendres de riz, des résidus de bauxite ou leurs combinaisons. En particulier, la composition de silicate et d'oxydes métalliques est par exemple sélectionnée parmi des laitiers de hauts fourneaux, des pouzzolanes telles que des cendres volcaniques, des cendres volantes, de la fumée de silice, des cendres de matières végétales telles que des cendres de riz, des résidus de bauxite ou leurs combinaisons.

De façon préférée, les oxydes métalliques sont des oxydes de métaux de transition. Les oxydes métalliques peuvent de préférence provenir d'une composition de laitiers de hauts fourneaux par exemple formés lors de l'élaboration de la fonte à partir de minerai de fer.

Les inventeurs ont identifié une importance de la quantité massique d'oxydes métalliques en combinaison avec la matrice argileuse crue. De façon préférée, le liant de construction comporte au moins 10 % en poids sec d'oxydes métalliques.

Par exemple, un liant de construction peut comporter au moins 15% en poids sec d'une composition de laitiers de hauts fourneaux.

Néanmoins, contrairement à d'autres solutions techniques privilégiant une concentration très élevée de laitiers de haut fourneaux, cendres volantes ou métakaolin, les inventeurs de la présente invention ont déterminé qu'il était préférable de ne pas dépasser certaines concentrations de façon à conserver des propriétés de confort hygrothermique élevées et un bilan carbone intéressant.

Ainsi, le liant de construction comporte de préférence au plus 70 % en poids sec d'oxydes métalliques. De même, à titre d'exemple, un liant de construction pourra comporter moins de 30 % en poids sec d'oxydes métalliques, de préférence moins de 20 %, de façon plus préférée moins de 10%.

En outre, les inventeurs ont identifié que certaines valeurs de rapport entre la quantité massique de composition de silicate et d'oxydes métalliques et la quantité massique de matrice argileuse crue permettait un équilibre adéquat entre résistance mécanique et rapidité de prise.

Avantageusement, la composition de silicate et d'oxydes métalliques et la matrice argileuse crue sont présentes dans le liant de construction de façon à ce qu'un ratio massique de la composition de silicate et d'oxydes métalliques sur la matrice argileuse crue soit compris entre 0,6 et 5, de préférence 0,7 et 4, de façon plus préférée 0,8 et 3.

En particulier, la composition de silicate et d'oxydes métalliques représente de 20 % à 70 % en poids sec du liant de construction.

De façon préférée, la composition de silicate et d'oxydes métalliques représente de 30 % à 45 % en poids sec du liant de construction.

De façon plus préférée, la composition de silicate et d'oxydes métalliques représente de 55 % à 70 % en poids sec du liant de construction.

Comme cela a été détaillé, selon les inventeurs, il n'a jamais été proposé de combiner des laitiers de haut fourneaux, cendres volantes ou équivalent avec de l'argile crue, et une composition d'activation alcaline pour réaliser un matériau de construction à prise rapide.

En outre, parmi toutes les formulations pouvant être utilisées efficacement dans un procédé selon l'invention, les inventeurs ont identifié certaines formulations de liant de construction inédites en tant que telles et présentant un bilan carbone réduit, une prise rapide et des performances mécaniques élevées. Ces formulations inédites et particulièrement efficaces font parties en tant que telles de l'objet de la présente invention.

Ainsi, **selon un autre aspect,** l'invention porte sur un **liant de construction** susceptible d'être mis en œuvre dans le cadre du procédé selon la présente invention.

De façon préférée, le liant de construction selon l'invention est tel qu'il présente une ou plusieurs des caractéristiques du liant de construction utilisé dans le procédé selon l'invention et en particulier le liant de construction selon l'invention pourra comporter les caractéristiques nécessaires aux différents modes de réalisation du procédé, préférés, avantageux ou non. Par exemple, le liant de construction selon l'invention pourra comporter au moins 25% en poids de matrice argileuse crue, de préférence entre 25 et 45 % en poids de matrice argileuse crue ; ladite matrice argileuse crue comportant de la kaolinite et/ou de l'illite.

Par exemple, l'invention porte sur un liant de construction comprenant :
- de 10 % à 49 % en poids sec de matrice argileuse crue, ladite matrice argileuse crue comportant de la kaolinite et/ou de l'illite ;
- de 20 % à 70 % en poids sec d'une composition de silicate et d'oxydes métalliques ;
- de 2 % à 50 % en poids sec d'une composition d'activation alcaline ; et
- de 0,1 % à 15 % en poids sec d'un agent défloculant.

Une telle formulation de liant pour matériau de construction permet d'obtenir un matériau présentant une prise rapide tout en comportant une matrice argileuse crue de préférence à des concentrations élevées permettant de produire un matériau à faible empreinte carbone. Ainsi, une telle formulation correspond également à une formulation de liant pour matériau de construction à prise rapide.

De façon préférée, le liant de construction peut comprendre :
- de 15 % à 49 % en poids sec de matrice argileuse crue, ladite matrice argileuse crue comportant de la kaolinite et/ou de l'illite ;
- de 20 % à 70 % en poids sec d'une composition de silicate et d'oxydes métalliques ;
- de 2 % à 50 % en poids sec d'une composition d'activation alcaline ; et
- de 0,25 % à 10 % en poids sec d'agent défloculant.

De façon plus préférée, le liant de construction peut comprendre :
- de 25 % à 45 % en poids sec de matrice argileuse crue, ladite matrice argileuse crue comportant de la kaolinite et/ou de l'illite ;
- de 25 % à 45 % en poids sec d'une composition de silicate et d'oxydes métalliques ;
- de 15 % à 35 % en poids sec d'une composition d'activation alcaline ; et
- de 1 % à 10 % en poids sec d'agent défloculant, de préférence de 1,5 % à 10 %.

Une telle composition présente une concentration massique plus faible d'une composition de silicate et d'oxydes métalliques compensée par une concentration plus importante en composition d'activation alcaline. Une telle composition présentera généralement une prise accélérée.

De façon encore plus préférée, le liant de construction peut comprendre :
- de 20 % à 45 % en poids sec de matrice argileuse crue, ladite matrice argileuse crue comportant de la kaolinite et/ou de l'illite ;
- de 40 % à 70 % en poids sec d'une composition de silicate et d'oxydes métalliques ;
- de 4 % à 15 % en poids sec d'une composition d'activation alcaline ; et
- de 1 % à 10 % en poids sec d'agent défloculant, de préférence de 1,5 % à 10 %.

Une telle composition présente une concentration massique plus importante d'une composition de silicate et d'oxydes métalliques compensée par une concentration plus faible en composition d'activation alcaline. Une telle composition présentera généralement des performances de résistance mécanique plus élevées.

En outre, de façon préférée, dans un liant de construction, la composition de silicate et d'oxydes métalliques et la matrice argileuse crue sont présentes de façon à ce qu'un ratio massique de la composition de silicate et d'oxydes métalliques sur la matrice argileuse crue soit compris entre 0,6 et 5, de préférence 0,7 et 4, de façon plus préférée 0,8 et 3. Comme précédemment, le poids sec est de préférence pris en considération. En effet, les inventeurs ont déterminé que certains rapports massiques entre la composition de silicate et d'oxydes métalliques et la matrice argileuse crue permettaient d'obtenir un matériau présentant des propriétés de prise rapide et de résistance mécanique tout en bénéficiant d'une empreinte carbone faible et dans certains cas de propriété hygrothermiques avantageuses.

En particulier, l'agent défloculant représente au moins 1 % en poids sec du liant pour matériau de construction, de préférence au moins 1,5 % en poids sec du liant pour matériau de construction. L'agent défloculant permet comme montré dans les exemples d'atteindre une prise rapide sans montée en température ce qui est avantageux pour réduire encore l'empreinte carbone du liant.

Comme mentionné, un liant de construction pourra être utilisé dans le cadre d'un procédé selon l'invention ou d'un autre procédé, pour former un matériau de construction, tel qu'un élément préfabriqué.

Ainsi, **selon un autre aspect,** l'invention porte sur un **matériau de construction à prise rapide** en tant que tel, en particulier un élément de préfabrication ou un matériau de construction réalisé par la mise en œuvre d'un procédé selon l'invention. L'élément de préfabrication comprend de préférence un liant de construction tels que ceux décrits précédemment et de 200 % à 600 % de granulats en poids sec de liant.

Les granulats ajoutés peuvent par exemple être des granulats recyclés ou non. Ils sont de préférence des agrégats, de préférence minéraux, de dimension millimétrique à centimétrique. Par exemple, les granulats peuvent présenter un diamètre compris entre 0 mm et 20 mm, de préférence entre 0 mm et 16 mm. En particulier, les granulats peuvent être choisis parmi les fillers, des poudres, du sable, des gravillons, des graviers, et/ou des fibres.

En outre, un matériau de construction peut comprendre une ou plusieurs charges, les charges étant par exemple choisies parmi des charges minérales et/ou des charges végétales.

Un tel matériau de construction peut aussi comprendre en outre des additifs ou des matériaux permettant de modifier les propriétés mécaniques du matériau de construction final comme par exemple un agent expansif ou moussant, tel que de la poudre d'aluminium ; un agent de maintien rhéologique synthétique ou naturel ; un agent anti-retrait ; un agent rétenteur d'eau ; un agent entraîneur d'air ; une résine synthétique ; des fibres ; ou encore un plastifiant tel qu'un polynaphtalène sulfonate, un polycarboxylate, ou un polyphosphonate ; et leurs mélanges.

De préférence, le matériau de construction peut aussi comporter des fibres. Les fibres sont par exemple sélectionnées parmi : des fibres végétales telles que des fibres de coton de lin, de chanvre, de cellulose, de bambou, de miscanthus, des fibres synthétiques telles que des fibres métalliques, de verre, de carbone, de polypropylène et leurs mélanges. La présence de fibres peut permettre la formation d'un matériau de construction aux propriété mécaniques et isolantes améliorées.

Le liant de construction est en particulier celui utilisé dans le procédé selon l'invention, mélangé aux granulats et à l'eau pour former un matériau de construction selon l'invention (e.g. élément de préfabrication).

Ainsi, selon **un autre aspect,** l'invention porte sur un matériau de construction, en particulier un élément de préfabrication susceptible d'être obtenu à partir d'un procédé selon l'invention et de préférence obtenu à partir d'un procédé selon l'invention.

Par exemple, à partir d'un liant de construction décrit dans la présente demande, il est possible de fabriquer des :
- Matériaux de construction isolant : à partir d'un liant de construction additionné de granulats légers de type « végétaux ou poreux » ;
- Bétons allégés : à partir d'un liant de construction additionné d'agent moussant type poudre d'aluminium. Cela va permettre de piéger de l'air dans le matériau et améliorer ces propriétés isolantes ;
- Eléments de préfabrication : fabrication de blocs ou plaques de béton en usine à partir du liant de construction; et
- Modules d'isolation.

De façon préféré, l'élément de préfabrication, tel qu'une cloison, présente une face d'une surface d'au moins 1 m², de façon plus préférée d'au moins 1,5 m², de façon encore plus préférée d'au moins 2 m².

En outre, l'élément de préfabrication peut présenter une épaisseur comprise entre 0,3 cm et 20 cm, avantageusement entre 0,5 cm et 10 cm et de façon préférée entre 1 cm et 7 cm.

Ainsi, il est possible à partir d'un liant de construction et la mise en œuvre d'un procédé selon l'invention de réaliser notamment des éléments de revêtement, des modules de construction extrudés ou moulés, ou plus généralement des formes extrudées variées.

Les éléments de revêtement peuvent par exemple être sélectionnés parmi des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles. Les modules de construction extrudés ou moulés, quant à eux, sont par exemple des briques.

L'invention porte également sur l'utilisation du liant de construction selon l'invention, pour la réalisation de matériaux composites, des blocs préfabriqués.

Les matériaux composites sont par exemple des panneaux de construction de type panneaux préfabriqués, tandis que les blocs préfabriqués sont par exemple des linteaux de porte ou de fenêtre, des éléments de murs préfabriqués, ou tout autre élément de construction préfabriqué.

L'invention porte également sur l'utilisation du liant de construction selon l'invention, pour la réalisation de modules d'isolation, tels que des panneaux de cloisons, ou des modules de construction isolants légers. Ces modules d'isolation présentent par exemple une masse volumique inférieure à 1,5 kg/L, de préférence inférieure à 1,2 kg/L, de façon plus préférée inférieure à 1,0 kg/L et de façon encore plus préférée inférieure à 0,7 kg/L.

L'invention porte également sur l'utilisation du liant de construction selon l'invention, pour la mise en œuvre d'une fabrication additive. En particulier, la mise en œuvre d'une fabrication additive peut être réalisée au moyen d'un système de construction en 3D automatisé telle qu'une imprimante 3D. Une telle fabrication additive peut permettre la fabrication d'éléments de construction, de bâtiments ou de maisons, ou encore d'objets de décoration.

Le liant de construction peut être utilisé sous la forme d'un système bi-composant avec soit d'une part les constituants sous forme solide, et d'autre part les constituants sous forme liquide, soit les constituants sous la forme de deux pâtes, pour la réalisation de mastic, colle ou mortier de scellement.

Comme cela est illustré par les exemples ci-après, la présente invention fournit une solution basée sur un mélange de matrice argileuse crue, d'agent défloculant et de composition d'activation pour proposer un liant de construction aux propriétés mécaniques similaires au standard tout en présentant une empreinte carbone réduite et une prise rapide.

### EXEMPLES :

### Préparation d'un matériau de construction à prise rapide :

Dans tous les exemples présentés ci-après, les formulations sont préparées selon un protocole identique, à savoir qu'un prémélange à sec est réalisé entre une matrice argileuse crue, une composition d'activation alcaline et une composition de silicate et d'oxydes métalliques. Dans certaines des préparations, un défloculant peut avantageusement être ajouté dans des quantités prédéterminées.

De l'eau est ajoutée au prémélange à sec et la solution est mélangée à basse vitesse, c'est-à-dire à moins de mille tours par minute.

Le rapport massique eau sur matières sèches de la composition (aussi appelée liant de construction) est ajusté à une valeur inférieure à 0,6.

Le liant de construction ainsi formé est ensuite mélangé avec des granulats, coulé dans un moule puis laissé à maturation pendant vingt heures dans une étape de cure, à température ambiante, c'est-à-dire environ 25 degrés Celsius ou sous traitement thermique. Lors de cette étape de cure, le moule peut être rendu hermétique ou la couche supérieure du matériau de construction peut être recouverte d'un produit de cure pour en limiter/empêcher l'évaporation.

### Méthodologie de mesure des propriétés mécaniques des matériaux de construction :

Une fois la cure terminée, la résistance mécanique est mesurée. On entend par résistance mécanique d'un matériau de construction, sa résistance à la compression, une telle compression étant mesurée selon la norme NF EN 196-1, pour un prisme de 40 millimètres de côté et 160 millimètres de longueur et est exprimée en Méga Pascal (MPa).

### Comparaison des matériaux de construction à prise rapide selon l'invention aux matériaux de construction connus :

Le tableau 2 ci-dessous présente, pour différents types de matériaux de construction, des formulations connues et une formulation selon l'invention. La masse des composants relatifs à chaque formulation est exprimée en pourcentage de la masse totale du liant de construction (poids sec).

**[Tableau 2]**

| | **Formulations** | | | |
|---|---|---|---|---|
| | **CEM1 (Référence)** | **CEM « bas carbone » (Référence)** | **MUPF1** | **MUPF5** |
| Matrice Argileuse Crue | 0,0% | 0,0% | **34,0%** | **31,0%** |
| Agent défloculant | 0,0% | 0,0% | **3%** | **0,0%** |
| Composition de silicate et d'oxydes métalliques | 0,0% | 50,0% | 34,0% | 63,0% |
| Composition d'activation alkaline autre que du CEM | 0,0% | 0,0% | 29% | 6,0% |
| Ciment CEM | 100% | 50,0% | 0,0% | 0,0% |
| Sable | 300% | 300% | **333%** | 282% |
| Température de cure (°C) | 25°C | 25°C | 60°C | 60°C |
| Résistance à la Compression (MPa) | **24** | 13 | **34** | **24** |
| Empreinte Carbone estimée | Haute | Moyenne | **Faible** | **Faible** |

Ainsi, le tableau 2 présente les résistances mécaniques de matériaux de construction connus **(Liant CEM1, CEM « bas carbone** ») et ne faisant pas partie de l'invention, tel que le liant de construction de type CEM1 plus connu sous la dénomination de ciment « Portland » dont la résistance à la compression est de l'ordre de 60 MPa après 28 jours et de 24 MPa après 20h. La formulation **CEM « bas carbone** » peut être obtenue en remplaçant une moitié du pourcentage en poids sec de ciment de type CEM par du Laitiers de Hauts Fourneaux (LHF) ou une autre composition de silicate.

Ces essais montrent que l'ajout d'une composition de silicate et d'oxydes métalliques (e.g. LHF) entraine un ralentissement de la prise et donc n'est pas en tant que telle satisfaisante pour la préparation d'un matériau de construction à prise rapide.

Au contraire, les préparations MUPF1 et MUPF5 permettent la génération d'un matériau de construction permettant aux pré-fabricants de déplacer ou de démouler le lendemain sans casser la pièce béton nécessitant pour cela une résistance mécanique d'au moins 16 MPa après 20h.

En particulier, le tableau 2 montre que la formulation MUPF1 selon l'invention comportant 3% d'agent défloculant, et une proportion élevée de matrice argileuse crue (>25 %), présente une résistance mécanique supérieure, après 20h, à la résistance mécanique du ciment Portland tout en présentant une empreinte carbone beaucoup plus faible.

En outre, avec un pourcentage de matrice argileuse crue supérieure à 25%, un matériau de construction à prise rapide tel qu'un élément de préfabrication selon l'invention est en mesure de présenter des propriétés hygrothermiques désirables dans le domaine de la construction.

### Importance de l'agent défloculant

Le tableau 3 ci-dessous présente une formulation de référence MUPF2 et une formulation selon l'invention MUPF4.

**[Tableau 3]**

| | **Formulations** | |
|---|---|---|
| | **MUPF2 (Référence)** | **MUPF4** |
| Matrice Argileuse Crue (Kaolin) | 35% | **34%** |
| Agent Défloculant | 0% | **3%** |
| Composition d'activation alcaline | 30% | 29% |
| Composition de silicate et d'oxydes métalliques | 35% | 34% |
| Granulats | 343% | 333% |
| Température de Cure (°C) | 25 | 25 |
| Résistance à la Compression (MPa) | 13 | **18** |

Le matériau de construction de type MUPF2 comprend 35 % en poids sec de matrice argileuse crue, 24% en poids sec d'une composition d'activation alcaline (silicate alcalin), 35% en poids sec de LHF. Une telle formulation pourrait être déduite en particulier de l'enseignement du brevet US7,288,148 qui enseigne une combinaison de cendre volante à plus de 85%, d'une composition d'activation alcaline et de Kaolin.

Néanmoins, l'expérimentation reportée en tableau 3 montre qu'une telle préparation ne peut pas être considérée comme un matériau de construction à prise rapide car après 20h, sa résistance mécanique est de 13 MPa, soit une résistance mécanique inférieure à 16 MPa. Comme cela a été mentionné, les documents de l'art antérieur identifiés ne proposent que des concentrations en argile crue inférieures ou égales à 10%. Cela peut s'expliquer par les résultats de MUPF2 qui montre que l'augmentation de la concentration en argile crue entraine une réduction de la résistance mécanique à 20h.

Au contraire, le matériau MUPF4 obtenu selon l'invention et comportant une composition similaire à l'exception de la présence d'un agent défloculant à 3 % (i.e matière sèche) présente une résistance mécanique de 18 MPa. Ainsi, le matériau MUPF4 pourrait être considéré comme un matériau de construction à prise rapide.

Ces résultats confirment la pertinence d'un matériau de construction selon l'invention et mettent en exergue l'avantage conféré sur la résistance à la compression à courte échéance par la présence d'une matrice argileuse crue, un agent défloculant et composition de silicate et d'oxydes métalliques par exemple issus de la métallurgie, tel qu'un laitier de haut fourneaux ou encore à des cendres volantes.

### Importance du traitement thermique :

Le tableau 4 ci-dessous détaille la formulation de plusieurs matériaux de construction de référence et de matériaux de construction adaptés pour former un élément de préfabrication selon l'invention. Ces matériaux de construction diffèrent notamment en ce que certains ont subi lors de l'étape de cure un traitement thermique.

**[Tableau 4]**

| | **Formulations** | | | | |
|---|---|---|---|---|---|
| | **MUPF7 (Référence)** | **MUPF5** | **MUPF4** | **MUPF3** | **MUPF1** |
| Matrice Argileuse Crue | 31,0% | 31,0% | **34%** | **34%** | **34%** |
| Agent Défloculant | 0,0% | 0,0% | **3%** | **3%** | **3%** |
| Composition d'activation alcaline | 6,0% | 6,0% | 29% | 29% | 29% |
| Composition de silicate et d'oxydes métalliques | 63,0% | 63,0% | 34% | 34% | 34% |
| Sable | 282% | 282% | 338% | 333% | 338% |
| Température de Cure (°C) | 25 | 60 | 25 | 40 | 60 |
| Résistance à la Compression (MPa) | *Pas de prise* | **24** | **18** | **26** | **34** |

Le tableau 4 montre qu'une formulation comportant une matrice argileuse crue, une composition d'activation et une composition de silicate pourrait ne pas présenter de prise après 20h de cure à 25°C. Cependant, cette même formulation traitée à 60 °C présente, après 20 heures, une résistance mécanique de 24 MPa, la qualifiant comme matériau de construction à prise rapide.

En outre, les formulations MUPF4, MUPF3, et MUPF1 montrent clairement qu'une augmentation de la température permet une augmentation de la résistance mécanique obtenue à partir de 20h. En outre, cet effet bénéfique se combine à l'effet positif apporté par l'utilisation d'un défloculant.

### Importance de la matrice argileuse crue utilisée :

Le tableau 5 ci-dessous détaille la formulation de plusieurs matériaux de construction de référence ou selon l'invention.

Ces formulations diffèrent notamment par la nature de la matrice argileuse crue utilisée.

**[Tableau 5]**

| | **Formulations** | | | |
|---|---|---|---|---|
| | **MUPF1** | **MUPF10 (Référence)** | **MUPF11 (Référence)** | **MUPF12** |
| Matrice Argileuse Crue | **34,0% Kaolinite** | 34,0% Bentonite | 34,0% Montmorillonite | **34,0% Illite** |
| Agent Défloculant | **3%** | **3%** | **3%** | **3%** |
| Composition d'activation alcaline | 29% | 29% | 29% | 29% |
| Composition de silicate et d'oxydes métalliques | 34% | 34% | 34% | 34% |
| Sable | 333% | 333% | 333% | 333% |
| Température de Cure (°C) | 60 | 60 | 60 | 60 |
| Résistance à la Compression (MPa) | **34** | 14 | 10 | **32** |

Le tableau 5 montre qu'une formulation comportant une matrice argileuse crue à base de Bentonite ou de Montmorillonite ne permettra pas à 20h d'obtenir une résistance mécanique satisfaisante pour un matériau de construction à prise rapide. Ces formulations peuvent permettre d'atteindre après plusieurs jours des valeurs de résistance à la compression satisfaisantes mais l'objet de la présente invention est de proposer des matériaux de construction, notamment des éléments de préfabrication à prise rapide. Cela permet de déplacer ou de démouler rapidement l'élément de préfabrication sans risquer de l'endommager.

Au contraire, des formulations similaires à base de Kaolinite ou d'Illite permettent de satisfaire au besoin d'un matériau de construction présentant un bilan carbone satisfaisant et à prise rapide. En outre, ces préparations comportent plus de 25 % de matrice argileuse crue et pourront présenter de bonnes propriétés hygrothermiques comparées à d'autres matériaux de construction à base de ciment Portland, métakaolin ou aluminosilicates.

## Revendications

1. Procédé (100) de réalisation d'un élément de préfabrication préparé à partir d'un liant de construction, ledit liant de construction comportant une composition d'activation alcaline et une composition de silicate et d'oxydes métalliques ; des granulats et de l'eau, ledit procédé comprenant :
- une étape de mélange (120) des constituants du liant de construction avec les granulats et l'eau, et
- une étape de cure (130) du mélange pendant au moins 2 heures ;
ledit procédé étant **caractérisé en ce que** le liant de construction comporte en outre une matrice argileuse crue, ladite matrice argileuse crue comportant de la kaolinite et/ou de l'illite ; et
**en ce que** l'étape de cure (130) comporte un traitement thermique du mélange, ledit traitement thermique ne comportant pas de traitement d'au moins 2 heures à une température supérieure à 110 °C et/ou le liant de construction comporte en outre un agent défloculant.

2. Procédé de réalisation d'un élément de préfabrication selon la revendication 1, **caractérisé en ce que** l'étape de cure (130) comporte un traitement thermique, ledit traitement thermique étant réalisé pendant au moins 2 heures à une température supérieure à 25°C, de préférence supérieure à 30°C.

3. Procédé de réalisation d'un élément de préfabrication selon l'une des revendications 1 ou 2, **caractérisé en ce que** l'étape de cure (130) comporte un traitement thermique, ledit traitement thermique étant réalisé pendant au moins 2 heures à une température inférieure à 110°C, de préférence inférieure à 100°C, de façon plus préférée inférieure ou égale à 90°C, de façon encore plus préférée inférieure ou égale à 80°C.

4. Procédé de réalisation d'un élément de préfabrication selon l'une quelconque des revendications 1 à 3, **caractérisé en ce que** le liant de construction comporte un agent défloculant, ledit défloculant étant un défloculant organique.

5. Procédé de réalisation d'un élément de préfabrication selon l'une des revendications 1 à 4, **caractérisé en ce qu'**il comporte une étape de coulage (125) du mélange obtenu dans un moule, de préférence ledit moule étant un moule hermétique agencé pour limiter les échanges gazeux entre le mélange et l'air extérieur.

6. Procédé de réalisation d'un élément de préfabrication selon la revendication précédente, **caractérisé en ce qu'**il comporte, après l'étape de cure (130), une étape de déplacement du moule (135), ladite étape de déplacement du moule (135) étant réalisée au plus 24 heures après l'étape de coulage (125), de préférence au plus 20 heures après l'étape de coulage (125).

7. Procédé de réalisation d'un élément de préfabrication selon la revendication précédente, **caractérisé en ce qu'**il comporte, après l'étape de déplacement du moule (135), une étape de maturation (140) au cours de laquelle le mélange ayant subi l'étape de cure (130) est laissé en moule pour une durée de vie en moule supérieure ou égale à 48 heures de préférence supérieure ou égale à 72 h de façon plus préférée supérieure ou égale à 96h.

8. Procédé de réalisation d'un élément de préfabrication selon l'une quelconque des revendications 1 à 7, **caractérisé en ce que** l'agent défloculant représente de 0,1 % à 10% en poids sec du liant de construction.

9. Procédé de réalisation d'un élément de préfabrication selon l'une quelconque des revendications précédentes, **caractérisé en ce que** la matrice argileuse crue représente de 10 % à 49 % en poids sec du liant de construction, de préférence de 25 % à 40 % en poids sec du liant de construction.

10. Procédé de réalisation d'un élément de préfabrication selon l'une quelconque des revendications précédentes, **caractérisé en ce que** la matrice argileuse crue comporte en outre une autre argile comme par exemple de la Montmorillonite et/ou de la Bentonite.

11. Procédé de réalisation d'un élément de préfabrication selon l'une quelconque des revendications précédentes, **caractérisé en ce que** la composition de silicate et d'oxydes métalliques représente de 20 % à 70 % en poids sec du liant de construction, de préférence de 30 % à 45 % en poids sec du liant de construction ou de 55 % à 70 % en poids sec du liant de construction.

12. Procédé de réalisation d'un élément de préfabrication selon l'une quelconque des revendications précédentes, **caractérisé en ce que** la composition de silicate et d'oxydes métalliques est sélectionnée parmi des laitiers de hauts fourneaux ; des pouzzolanes telles que des cendres volcaniques, des cendres volantes, de la fumée de silice; des cendres de matières végétales telles que des cendres de riz ; des résidus de bauxite et leurs combinaisons.

13. Procédé de réalisation d'un élément de préfabrication selon l'une quelconque des revendications précédentes, **caractérisé en ce que** l'élément de préfabrication présente une résistance minimale à la compression sur cylindres, telle que mesurée par la norme NF EN 206-1, supérieure ou égale à 16 MPa après une durée d'étape de cure inférieure ou égale à 20 heures.

14. Procédé de réalisation d'un élément de préfabrication selon l'une quelconque des revendications précédentes, **caractérisé en ce que** le traitement thermique du mélange est réalisé à une température allant de 30°C à 90°C, de préférence à une température allant de 30°C à 80°C, ou de manière plus préférée à une température allant de 30°C à 70°C.

15. Elément de préfabrication obtenu par un procédé de réalisation selon l'une quelconque des revendications 1 à 14.
